# EUROPEAN PATENT APPLICATION

(11) **EP 4 485 194 A1**
(43) Date of publication of application: **01.01.2025**
(21) Application number: 23182888.0
(22) Date of filing: 30.06.2023
(51) Int. Cl.: G06F 9/48, G06F 9/50, G06F 9/455

(54) **MIGRATION OF APPLICATION EXECUTIONS ACROSS PROCESSING UNITS**

(71) Applicant: Aptiv Technologies AG, 8200 Schaffhausen (CH)
(72) Inventor: BEIER, Ralf Anton, 42287 Wuppertal (DE); PETIG, Christof, 42369 Wuppertal (DE)
(74) Representative: Bardehle Pagenberg Partnerschaft mbB Patentanwälte Rechtsanwälte

(57) **Abstract**

This document describes techniques and systems for migration of application executions across processing units. A first processor executes a first orchestrator to initiate an execution of an application. A target processor executes a second orchestrator in communication with the first orchestrator to migrate the execution of the application to the target processor. When the target processor is ready for migration of the application, the second orchestrator communicates to the first orchestrator that migration may proceed. When the first processor receives the communication, the execution of the application is migrated to the target processor. Migration, performed in this manner, may result in better resource balancing for different drive states, power savings by reducing the number of actively running processors, and/or faster start up times by initially running applications on low-power real-time processors and then migrating the applications to high-power processors.

## Description

### BACKGROUND

Automotive vehicles are becoming more advanced and computerized. They may include many different systems ranging from sensor systems (e.g., vehicle entry systems, radar systems, camera systems) and driving assist systems (e.g., adaptive cruise control (ACC), lane assistance systems), to entertainment systems, and mechanical systems (e.g., engine, braking systems, transmission systems). As computing resources expand in automotive vehicles, managing these resources and the related power issues associated with the computing resources becomes more challenging.

### SUMMARY

This document describes one or more aspects of migration of application executions across processing units. In one aspect, a system for migrating execution of applications across multiple processors on a vehicle includes a first processor on the vehicle to execute a plurality of applications until a migration of an execution of at least one application transfers the execution of the application to a target processor with available resources to execute the application. The system includes at least one target processor including the target processor with the available resources to execute the execution of the application using the available resources. Within the system architecture, a first orchestrator that executes on the first processor to initiate the execution of the application and then to manage the migration to the target processor. A second orchestrator that executes on the target processor, and is in communication with the first orchestrator, indicates the available resources for taking-over the execution of the application, and communicates with the first orchestrator to migrate the execution of the application to the target processor to resume where the execution left-off on the first processor.

These and other described techniques may be performed by hardware or a combination of hardware and software executing thereon. For example, a computer-readable storage media (CRM) may have instructions stored thereon and that when executed configure a processor to perform the described techniques. A system may include means for performing the described techniques. A processor(s) or processing unit(s) may be part of a system that is configured to execute the methods and techniques described herein.

This Summary introduces simplified concepts related to migration of application executions across processing units, further described in the Detailed Description and Drawings. This Summary is not intended to identify essential features of the claimed subject matter, nor is it intended for use in determining the scope of the claimed subject matter.

### BRIEF DESCRIPTION OF THE DRAWINGS

The details of migration of application executions across processing units are described in this document with reference to the Drawings that may use same numbers to reference like features and components, and hyphenated numbers to designate variations of these like features and components. The Drawings are organized as follows:

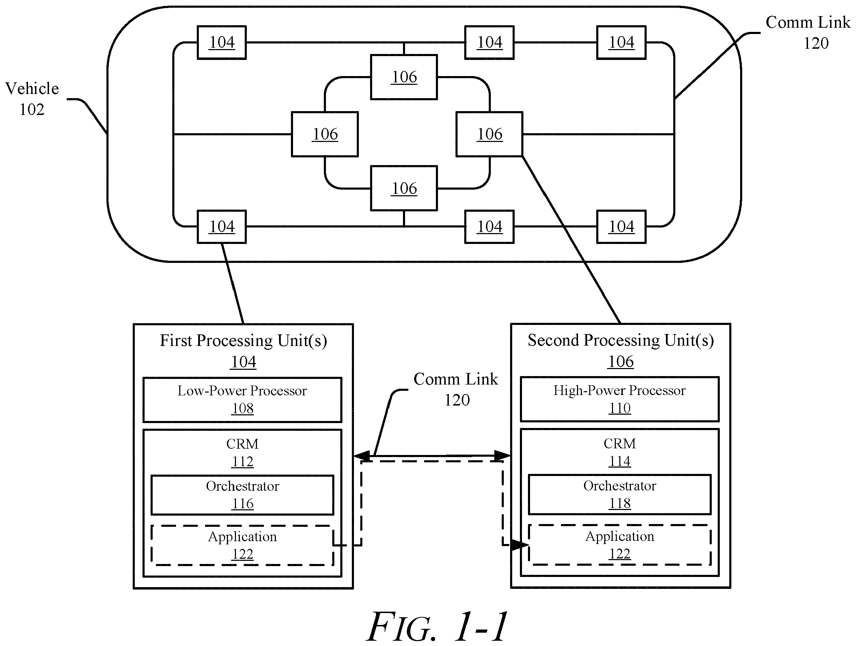

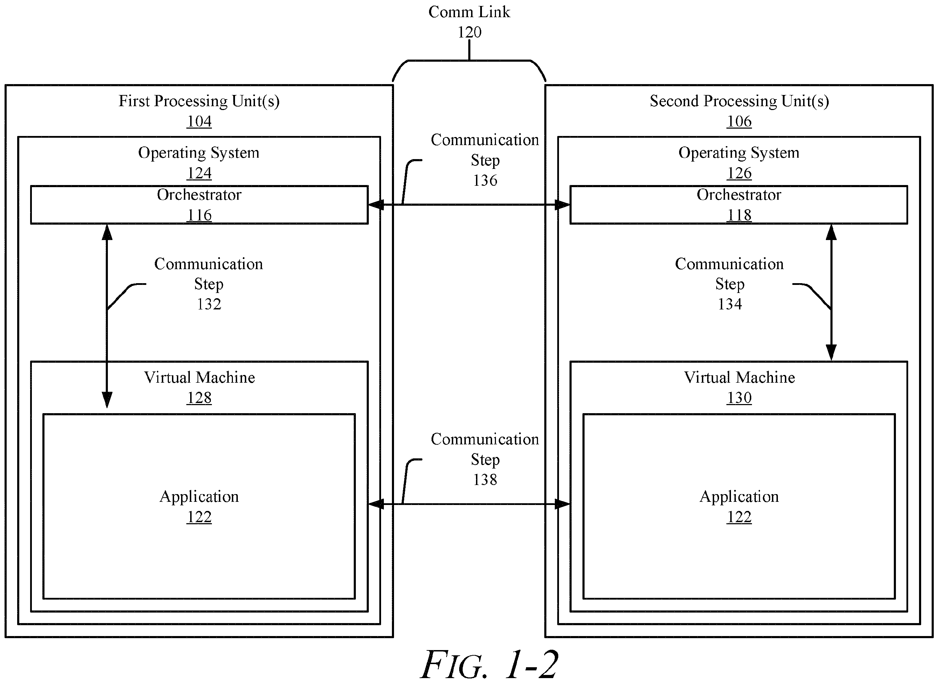

FIG. 1-1 illustrates an example vehicle in which migration of application executions across processing units may be applied, in accordance with techniques of this enclosure;
FIG. 1-2 illustrates an example data flow for migration of application executions across processing units, in accordance with techniques of this enclosure;
FIG. 2 illustrates example abstraction layers configured for migration of application executions across processing units, in accordance with techniques of this enclosure;
FIG. 3 illustrates an example distribution flow for migration of application executions across processing units, in accordance with techniques of this enclosure; and
FIG. 4 illustrates an example method that implements migration of application executions across processing units, in accordance with techniques of this enclosure.

### DETAILED DESCRIPTION

### OVERVIEW

Automotive vehicles have many systems that are controlled by processing circuits, such as microcontrollers, Electronic Control Units (ECU), System-on-Chips (SoC), and other processors. The system software (e.g., applications, services, device drivers) executed by these processing units have different levels of processing requirements and power requirements. Further, the processing requirements and power requirements may change over operation of a particular system. For example, some of the applications used to operate these systems may have less processing and power requirements during boot-up and initialization than when performing the primary functions of the applications, while other applications or systems may require more processing and power resources at start-up. Additionally, during vehicle ignition or at times when the engine is not running (e.g., at traffic stops when an engine shuts off to conserve fuel), the overall power provided to the systems may need to be carefully managed.

Many different processing circuits may be integrated into the vehicle systems, including a spectrum of hardware architectures ranging from basic, low-power consuming processors to complex, high-power consuming processors. Each different type of hardware architecture generally requires its own executable binary file that has been compiled for the specific type of hardware architecture. That is, an executable binary file compiled for one hardware architecture is likely not going to be executable on a different hardware architecture.

One solution to the computing and energy resource management problem is to port these applications to different hardware architectures and/or migrate the applications between the low-power processors and the high-power processors. During low-power modes (e.g., engine is not running, during vehicle start-up), the application may be executed on a low-power processor and then migrated to a high-power processor when it is ready to receive the application. However, migrating applications in this manner has many challenges. A major challenge is the diversity of hardware architectures integrated in the modern vehicle. A common way to achieve portability between architectures is to recompile source code for each specific type of hardware architecture. This can be problematic for rapidly distributing updated applications across a wide range of hardware architectures. Further, the layout or configuration of the data in memory can differ with each architecture, which previously has been addressed by using serialization of the different memory architectures to a common and (often) different portable data representation. Additionally, testing each separate compiled binary file corresponding to each different hardware architecture may be time consuming.

Another challenge is for an application migration to be accomplished efficiently such that the respective systems operate as expected. A common method to achieve this is to compile the application code into bytecode at runtime and execute the bytecode on a virtual machine running on each respective processor. This method overcomes having to test a compiled binary file for each separate hardware architecture, but there are inherent inefficiencies running bytecode at runtime that is not ideal for embedded automotive applications. Some of these inefficiencies are related to garbage handling and exception handling that may not be acceptable for real-time, deterministic situations. Additionally, many current migration processes typically require complex application code to serialize and deserialize the state of the application in addition to porting and testing the application code for the different hardware applications. This has made migration across architectures economically unattractive for automotive applications.

In contrast, the techniques described herein may enable migration of application executions (e.g., live migration) across hardware architectures to be economically beneficial for embedded applications such as automotive systems. A single binary executable file (e.g., an application) may be compiled to execute on a virtual machine (e.g., runtime environment) running on each processor (e.g., a first processor and a target processor). The binary executable file may initially be executed on a first processor (e.g., low-power, fast booting processor) along with a first orchestrator that manages the eventual migration of the execution of the application (e.g., transferring the contents of random-access memory of the processor to the target processor). Once a target processor (e.g., high power, complex processor) is ready, a second orchestrator running on the target processor sends a communication to the first orchestrator to cause the first processor to initiate the migration (e.g., when the target processor is in a ready state for the migration). The binary executable file may then be migrated to the target processor. That is, the execution of the application ceases on one processor and resumes execution in the same state (or updated for temporal changes) prior to the migration on the target processor; the migration occurs without any intermediary compilation step. In other cases, identical executable code may already reside in memory of each processor prior to migration, in which case migrating the portion of memory (e.g., RAM) containing this identical executable code is not required. The state of the machine is fully specified and fully portable. The internal state may not contain information about the outside environment, which may differ after a migration (e.g., resources such as assigned ports or file descriptors). Transferring the stacks and the memory is adequate and may remain portable across architectures. The virtual architecture creates identical data layout for both processors. Additionally, the application may also be migrated from a high-power processor to a low-power processor. In some cases, an application may be divided into an initialization part, configured to perform initialization functions (e.g., initialization process, initializing CAN communication, establishing communication on a network), and a main part, configured to perform the primary functions of the application. Once the initialization is complete, the initialized portion of the application may be ported to the target processor having already executed the main part, which is waiting for the migration of the initialization portion. The target processor may then continue operation of the application (e.g., establish sensor connections, perform primary functions of the application). The allocation of processing and power resources may be efficiently managed.

This document describes techniques and systems for migration of application executions across processing units. A first processor executes a first orchestrator to initiate an execution of an application. A target processor executes a second orchestrator in communication with the first orchestrator to migrate the execution of the application to the target processor. When the target processor is ready for migration of the application, the second orchestrator communicates to the first orchestrator that migration may proceed. When the first processor receives the communication, the execution of the application is migrated to the target processor. Migration, performed in this manner, may result in better resource balancing for different drive states, power savings by reducing the number of actively running processors, and/or faster start up times by initially running applications on low-power real-time processors and then migrating the applications to high-power processors.

### EXAMPLE SYSTEMS

FIG. 1-1 illustrates an example vehicle 102 in which migration of application executions across processing units may be applied, in accordance with techniques of this enclosure. The vehicle 102 includes one or more first processing units 104 (e.g., first processors) and one or more second processing units 106 (e.g., target processors). The first processing units 104 and the second processing units 106 are communicatively coupled by a comm link 120.

In FIG. 1-1, the vehicle 102 is illustrated as a passenger car. However, the vehicle 102 may represent other types of motorized vehicles (e.g., truck, motorcycle, bus, tractor, semitrailer truck), non-motorized vehicles (e.g., a bicycle), railed vehicles (e.g., a train), watercraft (e.g., a boat), aircraft (e.g., an airplane), spacecraft (e.g., satellite), and the like. In some respects, the vehicle 102 is a software-defined vehicle.

The first processing units 104 and the second processing units 106 include processors 108 and 110 (e.g., microprocessors, digital signal processors (DSP), ECUs, SoCs, and other processing circuitry) and a computer-readable storage media (CRM) 112 and 114 (e.g., non-transitory storage devices such as hard drives, solid state drives (SSD), flash memories, read-only memories (ROM), erasable programmable ROM (EPROM), or electrically erasable programmable ROM (EEPROM)). The CRMs 112 and 114 may store instructions to execute the techniques as described in this document including the orchestrators 116 and 118, respectively and other related instructions.

The one or more first processing units 104 and the one or more second processing units 106 may communicate over the comm link 120. The comm link 120 may be a wired or wireless based link and in some cases includes a communication bus. In some cases, the comm link 120 is ethernet-based and may also include a power backbone that supplies power to the processing units 104 and 106.

In some respects, the first processing units 104 include one or more low-power processors 108. The low-power processors 108 may generally consume less power and boot faster than high-power processors 110. In contrast the high-power processors 110 may generally handle more complex computing tasks than the low-power processors 108. Both the low-power processors 108 and the high-power processors 110 may have a diverse range of hardware architectures and software operating systems. The first processing units 104 may generally be used for more specific, computationally simple tasks (e.g., FOB key systems, mechanical systems, zone controllers that serves as a hub for sensors within a physical section of the vehicle, and the like), and the second processing units 106 are generally used for centralized computing tasks and/or more computationally complex tasks (e.g., centralized servers, system domain controllers, and others).

The CRMs 112 and 114 include orchestrators 116 and 118, respectively. In some respects, the orchestrators 116 and 118 may reside in respective application managers or may be external to the respective application managers and execute in parallel and concurrently to the respective application managers. When the vehicle 102 starts up (or during any situation in which starting an application on the low-power processing units 104 is desired), the processing units 104 and 106 both begin their boot-up process. Typically, the first processing units 104 may boot faster than the second processing units 106, and, thus, an application 122 may be executed on the first processing units more quickly. During the interim time between executing the application 122 on a first processing unit 104 and when a target second processing unit 106 is booted and running, the application 122 may be able to perform certain initialization processes such as diagnostics. During this interim time, the orchestrator 116 waits for a communication (e.g., message) from the orchestrator 118 indicating that the target second processing unit 106 is ready for the application 122 to be migrated. When the communication is received, the orchestrators 116 and 118 manage the migration of the execution of the application 122 from the first processing unit 104 to the second processing unit 106. For example, the vehicle system includes a first processor (e.g., the first processing unit 104) that executes a first orchestrator (e.g., the orchestrator 116) to initiate execution of an application (e.g., the application 122) on a vehicle (e.g., the vehicle 102). The vehicle system also includes a target processor (e.g., the second processing unit 106) that executes a second orchestrator (e.g., the orchestrator 118) in communication with the first orchestrator to migrate execution of the application from the first processor to the target processor, wherein, responsive to initiating the execution of the application, the first orchestrator waits for a communication from the second orchestrator that indicates the target processor is in a ready state for the migration of the execution of the application, and upon receiving the communication, causes the first processor to migrate the execution of the application to the target processor. Additionally, in some cases it may be necessary to migrate the execution of the application 122 from a second processing unit 106 back to a first processing unit 104, and in these cases the orchestrators handle the migration in a similar manner. The communication and management of the application 122 by the orchestrators 116 and 118 are described further in relation to FIG. 1-2.

FIG. 1-2 illustrates an example data flow for migration of application executions across processing units, in accordance with techniques of this enclosure. In this example, the vehicle 102 is started. The first processing unit 104 executes an operating system 124, and the second processing unit executes an operating system 126. For this example, it is assumed that the low-power processor 108 of the first processing unit 104 either boots the operating system 124 to an operating state quicker than the high-power processor 110 of the second processing unit 106 may boot the operating system 126, or the low-power processor 108 consumes less energy than the high-power processor 110. The operating system 124 may be the same type of operating system as the operating system 126, or they may be different types of operating systems.

The orchestrator 116 and a virtual machine 128 are executed on the first processing unit 104. Alternatively, the orchestrator 116 may be executed within the virtual machine 128. At communication step 132, the orchestrator 116 communicates with the application 122 waiting for an indication that the application 122 has reached a certain state that is ready for migration. This certain state may include a steady state appropriate for migration reached once the application 122 has performed some diagnostic or other simple start-up tasks. The orchestrator 116 is, likewise, waiting for an indication that the orchestrator 118 is ready for the migration process.

At some point in time (e.g., the same time that the first processing unit 104 begins boot-up, sometime after the first processing unit 104 begins boot-up), the second processing unit 106 begins its boot-up process. The second processing unit 106 boots to the operating system 126, and the orchestrator 118 and the virtual machine 130 are executed. Similar to orchestrator 116, the orchestrator 118 may, alternatively be executed within the virtual machine 130. When the orchestrator 118 determines that the virtual machine 130 is at a state ready for migration at communication step 134, the orchestrator 118 indicates to the orchestrator 116 that the second processing unit 106 is ready for migration of the execution of the application 122 at communication step 136. Communication steps 132, 134, and 136 may use different techniques when indicating a state of readiness among the different software actors such as callbacks, polling, publish/subscribe, web sockets, push notifications, and others. At communication step 138, the orchestrators 116 and 118 manage the migration of the application 122 from the first processing unit 104 to the second processing unit 106. The migration may include the binary executable file, the current (e.g., frozen) state of the application 122, and other relevant data (e.g., sensor related data, input/output related data) contained in memory (e.g., Random Access Memory (RAM)) related to the application 122. After the application 122 is received by the second processing unit 106, application 122 resumes execution (e.g., unfrozen) on the second processing unit 106 in the state it was at the point of migration. In this manner, power and computing resources may be efficiently managed in an embedded environment such as automotive vehicles.

### EXAMPLE IMPLEMENTATIONS

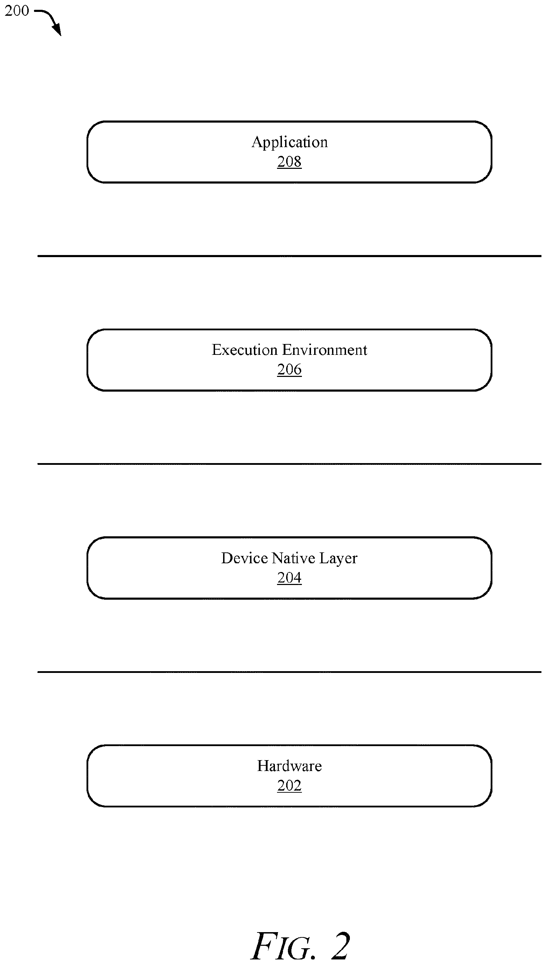

FIG. 2 illustrates example abstraction layers configured for migration of application executions across processing units, in accordance with techniques of this enclosure. The abstraction layers demonstrate how the software is abstracted from the hardware such that the application execution may be migrated. The device driver may be initialized on a low-power processing unit (e.g., the low-power processing unit 104) and then migrated to a high-power processing unit (e.g., the high-power processing unit 106). Layer 202 is a hardware abstraction layer. The hardware may include a sensor (e.g., radar system, camera system), hardware related to a mechanical system (e.g., braking system, transmission system, engine controllers) or other automotive systems.

Layer 204 is a device native abstraction layer (e.g., low-level abstraction layer). At this layer, the native operating system running on a processing unit using low-level instructions communicates with the hardware. The operating system may pass instructions between higher abstraction layers (e.g., layers 206 and 208) and the device native layer 204.

Layer 206 is an execution environment abstraction layer. A virtual machine is executed at this layer and runs within the operating system. The virtual machine may access the device native layer 204 through communications with the native operating system. Software libraries reside at this layer and contain instructions enabling an application (e.g., device driver, the application 122) to communicate to the layer 204.

Layer 208 is an application abstraction layer. This is the layer that the application, in this case a device driver, is executing. The application has been compiled to a native binary format for the virtual machine. When the application begins executing, it may instruct the device to boot up and initialize. At migration, the contents of RAM containing the executable application having the native binary format for the virtual machine, the related libraries (at layer 206), along with the application state and information specific to the device (e.g., absolute memory addresses related to the virtual machines) may be frozen and migrated to another processing unit (e.g., the processing unit 106) running a similar virtual machine using the same native binary format. This other processing unit may include similar abstraction layers as illustrated here. Once the migration including the RAM contents has completed, the application may resume execution at the same state with the same information being used to execute prior to the migration. Migrating applications, services, devices drivers, and the like, using these techniques enable an application to be executed using lower power processors and then transferred to a target higher power processor with the computing complexity needed for the main purpose of the application.

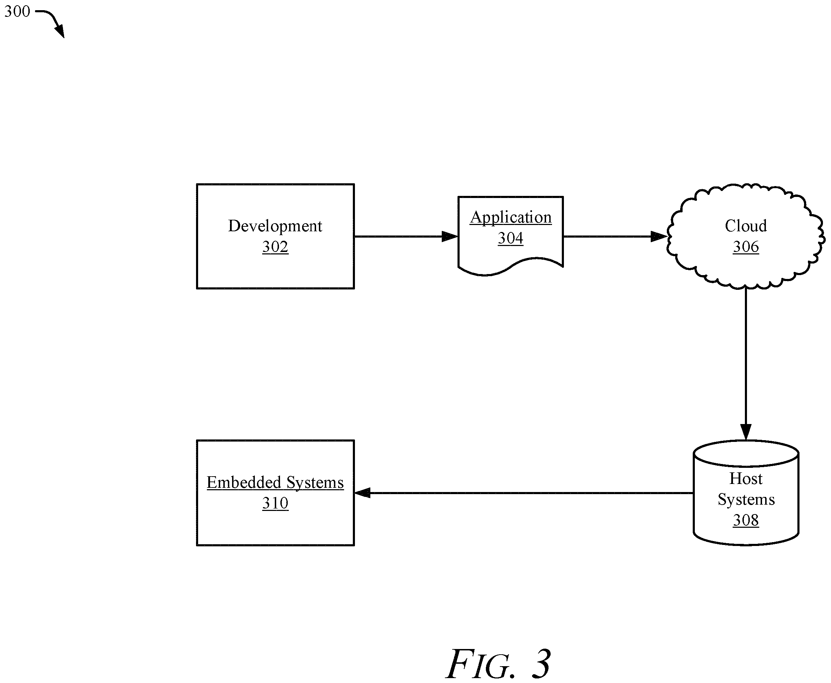

FIG. 3 illustrates an example distribution flow 300 for migration of application executions across processing units, in accordance with techniques of this enclosure. At 302, the source code for the application 304 is developed. The application 304 may be developed in isolation to other applications and system updates. The source code may be developed using a wide range of programming languages. The source code may be precompiled (e.g., ahead-of-time (AoT) compilation) into a binary format that is independent of hardware architectures. That is, the binary executable file of the application 304 may have a format that is native to a virtual machine instead of hardware architecture. This enables the binary executable file to be executed by different types of hardware architectures. The compiled application 304 may be tested as a single file as opposed to many files having to be tested for each different type of target hardware architecture. In other cases, it may be reasonable to transform the portable virtual program in a machine specific format, using AoT compilation of the virtual program for a specific machine, for both the small and large processing units to make execution more efficient on the specific machine. The data layout (RAM) may remain identical, but the stack may then be serialized and deserialized in these cases.

At 306, the developed application 304 may be uploaded to a cloud network or other database to distribute to host systems. The host systems 308 may download the application 304 as an over-the-air (OTA) update from the cloud. Similarly, the application 304 may be downloaded by other means (e.g., from a hard drive, via a wired connection) and at scheduled intervals (e.g., during maintenance checks) to the host systems 308. In some cases, the host systems 308 include one or more servers of a vehicle that may distribute updates to different embedded systems 310 integrated on the vehicle. The embedded systems 310 may receive the application 304 and implement the techniques as described herein. Distributing the application 304 in this manner allows for more efficient development of the application 304, and rapid updates and distribution of the application 304 to target systems.

### EXAMPLE METHODS

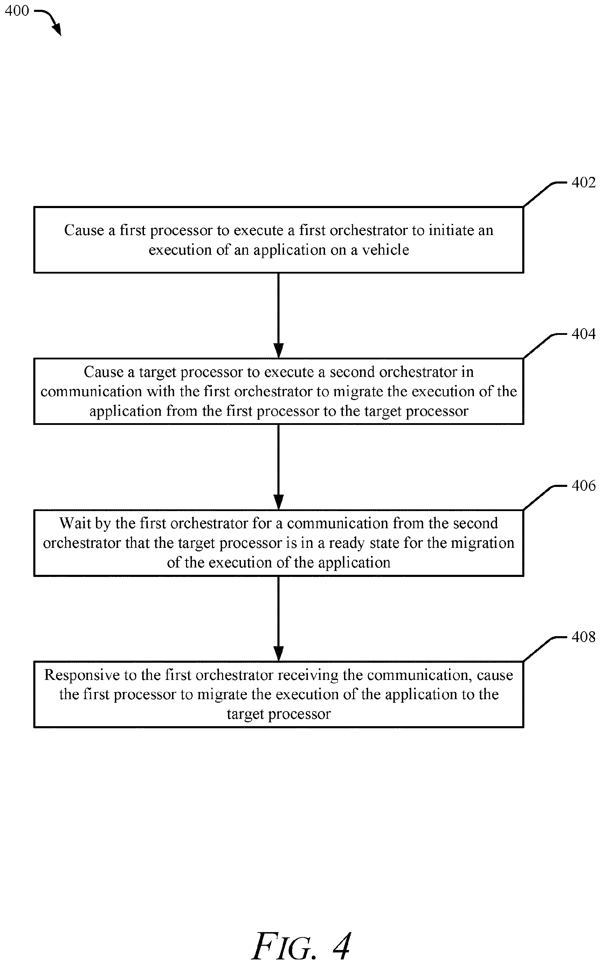

FIG. 4 illustrates an example method 400 that implements migration of application executions across processing units, in accordance with techniques of this enclosure. Method 400 is shown as sets of operations (or acts) performed, but not necessarily limited to the order or combinations in which the operations are shown herein. Further, any of one or more of the operations may be repeated, combined, or reorganized to provide other methods.

At step 402, a first processor (e.g., the first processing unit 104, the low-power processor 108) is caused to execute a first orchestrator to initiate an execution of an application (e.g., the application 122) on a vehicle. The first processor may be a fast-booting low-power consuming processor that is less computationally complex to a target processor (e.g., the second processing unit 106, the high-power processor 110) that is the ultimate target processor for the application. One non-limiting example of the first processor is a controller for a FOB used for keyless entry to the vehicle. The initialization of the application may include initializing network communications. The first processor may perform the step 404 by executing a plurality of applications on the vehicle. The first processor may further execute the first orchestrator on the first processor to initiate execution of an application.

At step 404, a second processor is caused to execute a second orchestrator in communication with the first orchestrator to migrate the execution of the application from the first processor to the target processor. The first processor executes the application and may enable the application to boot using less power and less time than the target processor may consume when booting the application. The first processor may execute the application through initialization of the application and maintain the application in a steady state waiting for a communication as described in step 406. Concurrently or not concurrently, the target processor boots and runs the second orchestrator to co-manage the migration of the application.

At step 406, responsive to initiating the execution of the application, the first orchestrator waits for a communication from the second orchestrator that the target processor is in a ready state for the migration of the execution of the application. The target processor may have a different type of hardware architecture than the first processor and may be running a different operating system than the first processor. However, the application has been compiled in a binary format that is independent of hardware architectures and may be run on a virtual machine running on both the first processor and the target processor. For example, in executing a first orchestrator on the first processor to initiate an execution of an application, the first processor determines whether the first orchestrator is to perform a migration of the execution of the application to a target processor with available resources to execute the application on the vehicle.

At step 408, responsive to the first orchestrator receiving the communication, the first processor is caused to migrate the execution of the application to the target processor. For example, the first processor communicates with a second orchestrator executing on the target processor that indicates the resources is available for taking-over the execution of the application;, and in response determines the migration is to happen. The first orchestrator may migrate, in communication with the second orchestrator, the execution of the application to the target processor to resume where the execution left-off on the first processor.

In some cases, the first orchestrator may jointly manage the migration with the second orchestrator. The migration may include the at least some binary contents of a random-access memory associated with the first processor. The binary contents may include the executable binary code of the application, the state of the application, and/or other relevant data associated with the application. The binary contents may also include absolute memory addresses pointing inside the virtual machine that remain identical across the migration. The application may be run on the target processor and control any other hardware without the extra steps of re-initializing with the respective hardware it may be accessing.

### ADDITIONAL EXAMPLES

Some additional examples for migration of application executions across processing units are provided below.

Example 1: A system for migrating execution of applications across multiple processors on a vehicle, the system comprising: a first processor on the vehicle to execute a plurality of applications until a migration of an execution of at least one application transfers the execution of the application to a target processor with available resources to execute the application; at least one target processor including the target processor with the available resources to execute the execution of the application using the available resources; a first orchestrator that executes on the first processor to initiate the execution of the application and then to manage the migration to the target processor; and a second orchestrator that executes on the target processor, and is in communication with the first orchestrator, indicates the available resources for taking-over the execution of the application, and communicates with the first orchestrator to migrate the execution of the application to the target processor to resume where the execution left-off on the first processor.

Example 2: The vehicle system of example 1, wherein the first orchestrator initiates the execution of the application by executing the application through an initialization process that includes establishing communication on a network of the vehicle.

Example 3: The vehicle system of any one of the preceding examples, wherein the first orchestrator and the second orchestrator migrate the execution of the application from the first processor to the target processor by: migrating at least some contents of a first random-access memory related to the application and accessible to the first processor to a second random-access memory accessible by the target processor.

Example 4: The vehicle system of example 3, wherein, prior to the first orchestrator and the second orchestrator migrating the execution of the application from the first processor to the target processor: the contents of the first random-access memory comprise executable code that causes the first processor to execute initialization functions of the application; and the contents of the second random-access memory comprise executable code that causes the processor to execute one or more primary functions of the application.

Example 5: The vehicle system of examples 3 or 4, wherein the contents of the first random-access memory that are migrated to the second random-access memory include current state and data related to the application.

Example 6: The vehicle system of any one of the examples 3 through 5, wherein the contents of the first random-access memory that are migrated to the second random-access memory comprise: absolute memory addresses related to different virtual machines executing independently on each of the first processor and the target processor.

Example 7: The vehicle system of any one of examples 3-6, wherein the first orchestrator and the second orchestrator migrate the execution of the application from the first processor to the target processor by: migrating the execution of the application from the first processor to the target processor, including: causing, by the first orchestrator, the first processor to cease execution of the application in a current state; and causing, by the second orchestrator, the target processor to resume execution of the application from the current state.

Example 8: The vehicle system of any one of the preceding examples, wherein the first processor has a different hardware architecture than the target processor, and wherein the migration of execution of the application from the first processor to the target processor comprises: migrating a main memory associated with the first processor to the target processor by copying the contents of the main memory using an identical data structure without serialization and deserialization of the main memory.

Example 9: The vehicle system of any one of the preceding examples, wherein: the first processor is a zone controller of the vehicle that serves as a hub for sensors within a physical section of the vehicle; and the target processor is a domain controller that performs centralized server functions for the vehicle.

Example 10: The vehicle system of any one of the preceding examples, wherein during instances of low-power availability, the second orchestrator migrates the application from the target processor back to the first processor.

Example 11: The vehicle system of any one of the preceding examples, wherein the application is compiled in a binary format that is independent of the hardware architecture of the first processor and the target processor, and wherein the application is compiled prior to being distributed to the vehicle system.

Example 12: The vehicle system of any one of the preceding examples, wherein the first orchestrator communicates with the second orchestrator to migrate the execution of the application to the target processor to resume where the execution left-off on the first processor by: checking for whether information communicated indicates either: there is a migration with the target processor; or a communication from the second orchestrator indicates the target processor is in a ready state for the migration; and in response to determining there is a migration or in response to receiving the communication, causes the first processor to send data to the second orchestrator to migrate the execution of the application to the target processor.

Example 13: The vehicle system of any one of the preceding examples, wherein the application is a service application or a device driver application.

Example 14: The vehicle system of any one of the preceding examples, wherein the first orchestrator and the second orchestrator: reside in respective application managers executing on the first processor and the target processor; or is external to the respective application managers and execute in parallel to the respective application managers.

Example 15: A method for migrating execution of applications across multiple processors on a vehicle, the method comprising: executing, by a first processor on the vehicle, a plurality of applications; executing, by the first processor, a first orchestrator on the first processor to initiate an execution of an application; determining, by the first processor, whether the first orchestrator is to perform a migration of the execution of the application to a target processor with available resources to execute the application on the vehicle; communicating, by the processor, with a second orchestrator executing on the target processor that indicates the resources is available for taking-over the execution of the application; and migrating, by the first orchestrator in communication with the second orchestrator, the execution of the application to the target processor to resume where the execution left-off on the first processor.

Example 16: A system comprising means for performing the method of example 15.

Example 17: A non-transitory computer-readable media comprising instructions that when executed, cause a first processor and a target processor to perform the method of example 15.

### CONCLUSION

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the spirit and scope of the disclosure as defined by the following claims. Problems associated with application processors consuming high amounts of power and requiring extra time during boot-up may occur in other systems. Therefore, although described as a way to migrate applications across hardware architectures embedded in an automobile, the techniques of the foregoing description may be applied to other systems that may benefit from managing power and computing resources at boot time. Further, these techniques may also be applied to other systems with multiple embedded systems having different types of architecture.

The use of "or" and grammatically related terms indicates non-exclusive alternatives without limitation unless the context clearly dictates otherwise. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

## Claims

1. A system for migrating execution of applications across multiple processors on a vehicle, the system comprising:
a first processor on the vehicle to execute a plurality of applications until a migration of an execution of at least one application transfers the execution of the application to a target processor with available resources to execute the application;
at least one target processor including the target processor with the available resources to execute the execution of the application using the available resources;
a first orchestrator that executes on the first processor to initiate the execution of the application and then to manage the migration to the target processor; and
a second orchestrator that executes on the target processor, and is in communication with the first orchestrator, indicates the available resources for taking-over the execution of the application, and communicates with the first orchestrator to migrate the execution of the application to the target processor to resume where the execution left-off on the first processor.

2. The vehicle system of claim 1, wherein the first orchestrator initiates the execution of the application by executing the application through an initialization process that includes establishing communication on a network of the vehicle.

3. The vehicle system of claims 1 or 2, wherein the first orchestrator and the second orchestrator migrate the execution of the application from the first processor to the target processor by:
migrating at least some contents of a first random-access memory related to the application and accessible to the first processor to a second random-access memory accessible by the target processor.

4. The vehicle system of claim 3, wherein, prior to the first orchestrator and the second orchestrator migrating the execution of the application from the first processor to the target processor:
the contents of the first random-access memory comprise executable code that causes the first processor to execute initialization functions of the application; and
the contents of the second random-access memory comprise executable code that causes the processor to execute one or more primary functions of the application.

5. The vehicle system of claims 3 or 4, wherein the contents of the first random-access memory that are migrated to the second random-access memory include current state and data related to the application.

6. The vehicle system of any one of the claims 3 through 5, wherein the contents of the first random-access memory that are migrated to the second random-access memory comprise:
absolute memory addresses related to different virtual machines executing independently on each of the first processor and the target processor.

7. The vehicle system of any one of claims 3-6, wherein the first orchestrator and the second orchestrator migrate the execution of the application from the first processor to the target processor by:
migrating the execution of the application from the first processor to the target processor, including:
causing, by the first orchestrator, the first processor to cease execution of the application in a current state; and
causing, by the second orchestrator, the target processor to resume execution of the application from the current state.

8. The vehicle system of any one of the preceding claims, wherein the first processor has a different hardware architecture than the target processor, and wherein the migration of execution of the application from the first processor to the target processor comprises:
migrating a main memory associated with the first processor to the target processor by copying the contents of the main memory using an identical data structure without serialization and deserialization of the main memory.

9. The vehicle system of any one of the preceding claims, wherein:
the first processor is a zone controller of the vehicle that serves as a hub for sensors within a physical section of the vehicle; and
the target processor is a domain controller that performs centralized server functions for the vehicle.

10. The vehicle system of any one of the preceding claims, wherein during instances of low-power availability, the second orchestrator migrates the application from the target processor back to the first processor.

11. The vehicle system of any one of the preceding claims, wherein the application is compiled in a binary format that is independent of the hardware architecture of the first processor and the target processor, and wherein the application is compiled prior to being distributed to the vehicle system.

12. The vehicle system of any one of the preceding claims, wherein the first orchestrator communicates with the second orchestrator to migrate the execution of the application to the target processor to resume where the execution left-off on the first processor by:
checking for whether information communicated indicates either:
there is a migration with the target processor; or
a communication from the second orchestrator indicates the target processor is in a ready state for the migration; and
in response to determining there is a migration or in response to receiving the communication, causes the first processor to send data to the second orchestrator to migrate the execution of the application to the target processor.

13. The vehicle system of any one of the preceding claims, wherein the application is a service application or a device driver application.

14. The vehicle system of any one of the preceding claims, wherein the first orchestrator and the second orchestrator:
reside in respective application managers executing on the first processor and the target processor; or
is external to the respective application managers and execute in parallel to the respective application managers.

15. A method for migrating execution of applications across multiple processors on a vehicle, the method comprising:
executing, by a first processor on the vehicle, a plurality of applications;
executing, by the first processor, a first orchestrator on the first processor to initiate an execution of an application;
determining, by the first processor, whether the first orchestrator is to perform a migration of the execution of the application to a target processor with available resources to execute the application on the vehicle;
communicating, by the processor, with a second orchestrator executing on the target processor that indicates the resources is available for taking-over the execution of the application; and
migrating, by the first orchestrator in communication with the second orchestrator, the execution of the application to the target processor to resume where the execution left-off on the first processor.
